# EUROPEAN PATENT SPECIFICATION

(11) **EP 2 118 517 B1**
(45) Date of publication and mention of the grant of the patent: **28.10.2015**
(21) Application number: 08730130.5
(22) Date of filing: 19.02.2008
(51) Int. Cl.: F16F 15/32, G01M 1/32

(54) **APPARATUS AND METHOD FOR DISPENSING VEHICLE BALLASTING WEIGHTS**
VORRICHTUNG UND VERFAHREN ZUR AUSGABE VON FAHRZEUGBALLASTGEWICHTEN
APPAREIL ET PROCÉDÉ DE RÉPARTITION DE POIDS DE LESTAGE POUR VÉHICULE

(30) Priority: 19.02.2007 US 890612 P
(43) Date of publication of application: 18.11.2009
(73) Proprietor: 3M Innovative Properties Company, Saint Paul, MN 55133-3427 (US)
(72) Inventor: PERECMAN, Jack L., Golden Valley, Minnesota 55422 (US)
(74) Representative: Isarpatent
(86) International application number: PCT/US2008/054269
(87) International publication number: WO 2008/103651

(56) References cited:
- WO-A-00/26630
- JP-A- 58 221 140
- JP-A- 2001 349 381
- US-A1- 2006 016 309

## Description

### Field of the Invention

The present invention relates to methods and devices for dispensing weights used in vehicle ballasting applications, in particular, for dispensing weights used in balancing rotating portions of a vehicle and, more particularly, for dispensing weights used in balancing automobile or other vehicle wheels.

### Background

Automotive wheel balancing devices or balancers currently use individual wheel balancing weights of varying sizes (i.e., weight), typically in increments of 5 grams or 1/4 ounces, and made of lead or other metals. In addition to being stored and applied separately, such individual conventional wheel weights require a different part number for each weight increment, and wheel diameter.

In an effort to avoid such problems with individual conventional weights, weights of the same size have been attached together along a length of adhesive tape. One or more of such taped wheel weights are removed from the tape and adhered to the desired location on the wheel, in accordance with the particular balancing requirements. One example of such a conventional tape of individual wheel balancing weights can be found in U.S. Patent No. 6,364,421. A problem with such taped individual wheel weights is that the balancing process can only round up or down one of the individual weights on the tape, when dispensing the number of individual weights to be used on a wheel. This lack of precision adds error to the wheel balancing results.

U.S. Patent Publication No. 2006/016309 discloses an apparatus for dispensing a predetermined amount of adhesive weighted tape that includes a controller adapted to receive a request for a desired amount of adhesive weighted tape and an elongated track member adapted to receive a supply of the adhesive weighted tape. A sensor is mounted adjacent a second end of the track member. The sensor in communication with the controller is operable to transmit a signal to the controller corresponding to a measured amount of weighted tape passing thereby. A motive apparatus in communication with the controller is adapted to move the weighted tape from a first end to the second end of the track member in response to the signal from the sensor. A cutting member disposed adjacent the second end of the track member is in communication with the controller and is adapted to cut the weighted tape in response to the signal from the sensor.

WO Patent Publication No. 00/26630 discloses a method and apparatus for dispensing weights. The apparatus includes a feed mechanism for feeding in a stock such as weighted lead tape. A calibrator is provided to calibrate a measured property of said stock to a desired property such as weight. There is also provided a measuring device, such as an optical sensor to measure the amount of stock being fed into the machine. A PLC is used to keep track of the measured amount, compare it to the desired amount as determined from the calibration, and to initiate a cutting sequence when the desired amount equals the measured amount. In the preferred form of the invention the measurement takes place by means of an optical sensor which may measure the length of stock fed into the device either directly or indirectly.

JP Patent Publication No. 2001 349381 is directed to providing a balance weight for a wheel capable of avoiding environmental pollution. To this end the reference proposes a compact having the same or larger than the specific gravity of lead that is formed by mixing metal powder of tungsten and the like with a synthetic resin or elastomers at a specified ratio, and a scale and pressure sensitive adhesive double coated tape are provided on a surface and a rear face of the compact, respectively, to be a long body weight.

The present invention provides one or more improvements in the art of vehicle wheel balancing, as well as in other ballasting applications.

### Invention Summary

The present invention has one or more advantages which can include, for example, allowing for a reduction in part numbers, or only one part number, to be used regardless of the variety of weight sizes needed, which reduces inventory. The present invention is not bound by having to dispense a ballasting weight in increments of a particular unit weight. Therefore, the present invention can also have the advantage of allowing for the application of the exact weight required for the particular ballasting application (e.g., to balance a wheel), which results in improved tire performance and vehicle ride. Further, the present invention can be used to automatically dispense such weights.

In accordance with a first aspect of the present invention, a method according to claim 1 is provided.

The vehicle ballasting weight material can be dimensioned or otherwise operatively adapted so as to be suitable (e.g., by being sufficiently loaded with the particulate material to provide a sufficient density) for use in balancing a wheel of an automobile (e.g, a car, van, truck, bus, etc.). The vehicle ballasting (e.g., wheel balancing) weight material can be substantially longer (e.g., 10, 20, 30, 40, 50, 60, 70, 80, 90, 100 or more times longer) than it is wide and substantially wider (e.g., 1, 2, 3, 4, 5, 6, 7, 8, 9, 10 or more times wider) than it is thick.

The vehicle ballasting weight material can have a density approximately equal to, somewhat less than, somewhat greater than or comparable to elemental lead, depending at least in part on size constraints for applying the weight material. The vehicle ballasting weight material can be provided in a rolled, spooled or otherwise wound form. The vehicle ballasting weight material can be provided in a container having an opening through which an end of the vehicle ballasting weight material can be dispensed or otherwise removed out of the container, and the method can further comprise removing at least the incremental length of the vehicle ballasting weight material from the container, before said severing.

The vehicle ballasting weight material can be backed with an adhesive suitable for permanently adhering or at least substantially adhering (i.e., the vehicle ballasting weight is bonded well enough to a desired portion of the vehicle to meet any applicable customer specifications and/or governmental regulations/requirements) the incremental length of the vehicle ballasting weight material to the vehicle. The vehicle ballasting weight material can be backed with an adhesive. The adhesive can be a pressure sensitive adhesive (e.g., a psa foam tape), which is desirably protected using a conventional release liner.

The severing step can comprise forming an incremental length of vehicle ballasting weight material that corresponds to the exact mass determined by the wheel balancing device. The incremental length of vehicle ballasting weight material can correspond to within 0.1 grams of the exact mass determined by the wheel balancing device.

In an additional aspect of the present invention, an apparatus according to claim 8 is provided.

The parallel links can enable the drive gear and the driven gear to remain meshed when the vehicle ballasting weight material being dispensed changes thickness. The the gap can automatically adjust to the thickness of the vehicle ballasting weight being dispensed, without having to make adjustments to how the first and second belt assemblies are mounted. The drive gear can drive the rotation of the belts simultaneous. The gap is open along at least one side of the first and second belt assemblies such that the gap can accommodate vehicle ballasting weight materials having a variety of widths. The present apparatus can be used in combination with a length of vehicle ballasting weight material in a rolled-up condition. It can be preferable for the rolled-up weight material to be wound on a level wound spool. The present apparatus can also be used in concert with (e.g., in a continuous or semi-continuous production line with) a wheel balancing device.

### Brief Description of Drawings

Fig. 1 is a perspective view of a length of adhesive-backed wheel weight material wound into a planetary roll in accordance with the present invention;
Fig. 2 is a perspective view of a length of adhesive-backed wheel weight material wound into a level-wound spool in accordance with the present invention;
Fig. 3 is a front plan view of a device for dispensing a wheel weight assembly in incremental lengths in accordance with one embodiment of the present invention; and
Fig. 4 is a partial front plan view of alternative wheel weight material feeder rollers for the device of Fig. 3.

### Exemplary Modes for Carrying Out the Invention

The present invention is directed to the dispensing of individual vehicle ballasting weight increments 10 that are cut or otherwise separated from a finite or continuous length of vehicle ballasting weight material 12. Such weight increments 10 are useful in vehicle ballasting applications such as, for example, balancing the wheels of an automobile or other vehicle. The weight material 12 is a high density polymer composite material comprising a flexible polymeric matrix material loaded or filled with a high density particulate material. The matrix material can comprise, for example, an elastomeric polymer material, and the high density particulate material can comprise, for example, stainless steel, tungsten and/or other metal particles. Examples of such a metal polymer composite material can be found in International Publication Nos. WO 2005/049714, and WO 2007/092018. It has been found that various of the metal polymer composite materials described in this publication can be particularly useful in making the weight material 12 used in accordance with the present invention. Such metal polymer composite materials are particularly useful in providing individual vehicle ballasting weight increments 10, because such composite materials can exhibit one or more, and preferably all, of following properties, even when loaded with a level of high density particles that results in the composite having a density approaching, equaling or exceeding the density of the metal lead: (a) their ability to be readily extrudable with a desired crossectional profile, (b) their flexibility, and (c) the ease in which such materials can be cut.

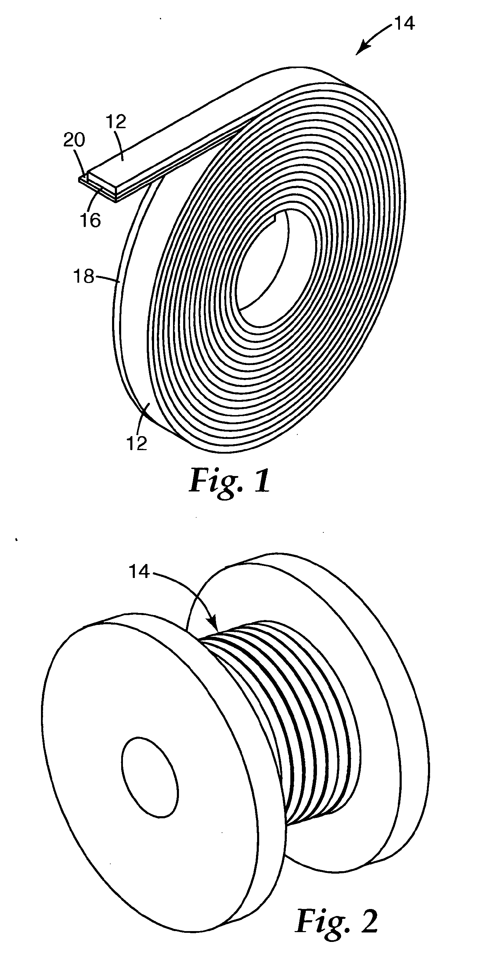

Referring to Figs. 1 and 2, it can be desirable for the length of weight material 12 to be in the form of an adhesive-backed vehicle ballasting weight assembly 14 that is wound into, for example, a planetary roll (Fig. 1) or a level-wound spool (Fig. 2). Level-wound spools are preferred over planetary rolls, because more of the assembly 14, or material 12, can be supplied for a given diameter with a level-wound spool than with a planetary roll. The weight assembly 14 includes an adhesive backing 16 protected by a release liner 18. The adhesive backing 16 can be, for example, a layer of pressure sensitive adhesive or other desired conventional adhesive (e.g., in the form of a coating or double-sided tape) that is compatible with the weight material 12 and the substrate (e.g., the rim of an automobile tire) on which the material 12 is be bonded (i.e., the adhesive is able to adequately bond to both the weight material 12 and the substrate). The liner 18 can be, for example, a silicon coated paper liner or other conventional release liner that is compatible with the adhesive 16 (i.e., the liner 18 will remain bonded so as to protect the adhesive 16 but is also readily removable when it is desirable to expose the adhesive 16). For wheel balancing applications, and other applications where the substrate to be bonded to is curved (i.e., has a simple or compound curvature), it is preferred that the adhesive 16 be in the form of a double-sided adhesive foam tape. In addition, for most if not all applications, the release liner 18 is preferably oversized, with a width that is wider than that of the weight material 12. In this way, the portion 20 of the liner 18 that extends beyond the longitudinal edge of the weight material 12 can be gripped when removing a length of the liner 18 from the adhesive 16. The present weight assembly 14 readily enables the use of the exact weight increment 10 required for the particular balancing application by simply cutting or otherwise separating the desired weight increment 10 from the length of weight assembly 14.

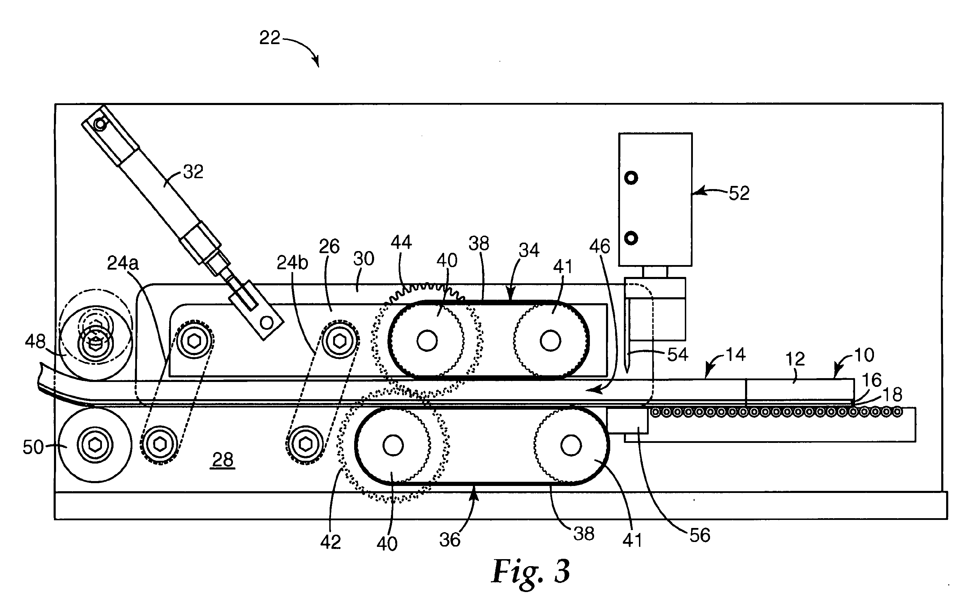

Referring to Fig. 3, a device 22 is shown that can be used to automatically cut an exact weight increment 10, from the length of an assembly 14. The device 22 includes a pair of parallelogram or parallel links 24a and 24b that connect a movable belt mounting plate 26 or other such movable mounting element to a stationary belt mounting or main plate 28 or other such stationary mounting element. The movable plate 26 is disposed within an opening 30 in the stationary plate 28 that is dimensioned to allow pivotal movement of the plate 26 within the opening 30 about the links 24a and 24b. A belt pressure actuating cylinder assembly 32 has its cylinder end mounted to the stationary plate 28, above plate 26, and its actuating piston end mounted to the movable plate 26, between the links 24a and 24b. The cylinder 32 is mounted with its longitudinal axis being at an obtuse or acute angle to the plate 26. An upper drive belt assembly 34 is mounted to the movable plate 26 and an opposing lower drive belt assembly 36 is mounted to the stationary plate 28 and below the upper belt 34.

Each of the drive belt assemblies 34 and 36 includes a drive belt 38 stretched over a rear pulley 40 and a forward pulley 41. Each pair of pulleys 40 and 41 are horizontally spaced apart. The lower drive belt assembly 36 includes a fixed-location drive gear 42, and the upper drive belt assembly 34 includes a movable driven gear 44. Gear 42 is mounted on a shaft that is driven, so as to rotate gear 42, using a conventionally drive mechanism such as, for example, a conventional electric servo motor. The gears 42 and 44 are mounted so that their teeth are meshed, with gear 44 being driven by the rotation of gear 42. The use of the parallel links 24a and 24b enable these two gears 42 and 44 to remain meshed regardless of the thickness of the weight material 12 being dispensed. The rear pulley 40 and the gear 42 of the assembly 36 are mounted on the same shaft so as to rotate together as the gear 42 is driven. The rear pulley 40 and the gear 44 of the assembly 34 are mounted on the same shaft so as to rotate together as the gear 44 is rotated. The gears 42 and 44 are disposed behind the plates 28 and 26, respectively. Each set of pulleys 40 and 41, with its belt 38, is disposed in front of its corresponding plate 28 or 26.

The drive belts 38 of assemblies 34 and 36 are mounted opposite to each other (e.g., one above and one below each other) so as to define an automatically adjustable gap 46 therebetween through which a weight assembly 14, or a weight material 12 alone, can be dispensed. The parallel links 24a and 24b allow the gap 46 between the opposing belt surfaces (i.e., the opposing movable surfaces of the belts 38) to automatically adjust to the thickness of the vehicle ballasting weight assembly 14 being used, without having to make adjustments to how the belt assemblies 34 and 36 are mounted. The gears 42 and 44 allow for simultaneous driving of the upper and lower belts 38, while still allowing the parallel links 24a and 24b to automatically adjust the gap 46. The links 24a and 24b are positioned behind the plates 26 and 28.

It can be desirable for the gap 46 to open along at least one side of the belt assemblies 34 and 36 (e.g., the side extending out of the figure). With such an open side, this exemplary device 22 is able to accommodate vehicle ballasting weight assemblies 14 having a wide variety of widths, without having to make any adjustments or other changes in the device 22. In addition, the use of such a driven belt system eliminates, or at least is less likely to cause, dents or other deformations in the weight assembly 14 (e.g., in the material 12, adhesive 16 and/or liner 18) that would be expected from using a pair of opposing pinch rollers to advance the leading end of the length of weight assembly 14 forward.

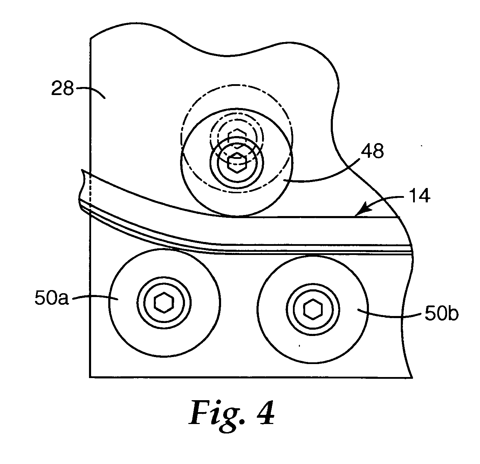

A length of the weight assembly 14 is preferably provided in a rolled-up condition such as, for example, wound on a spool (e.g., a level wound spool) or roll (e.g., a planetary roll). One end of the length of weight assembly 14 is pulled off of the roll (see Fig. 1) or spool (see Fig. 2), threaded between a set of opposing guide rollers 48 and 50, and into the gap 46. These rollers 48 and 50 are used to guide the weight assembly 14 into the gap 46. The rollers 48 and 50 are spring biased toward each other so as to pinch the weight assembly 14 therebetween. For example, guide roller 48 is vertically movable within a slot formed in plate 28, spring biased downward and disposed above roller 50. Alternatively, two lower guide rollers 50a and 50b can be used, instead of the single lower guide roller 50 (see Fig. 4).

In the operation of the device 22, a length of weight assembly 14, or weight material 12, is pulled off of the roll or spool and moved forward through the gap 46 and toward a severing position where a severing device 52 is located. The device 52 can have, for example, an axially movable arm or piston that includes a cutting blade 54 on its leading end and that can be actuated to move the blade 54 in cutting contact with a receiving anvil (e.g., a urethane or other plastic anvil) or other suitable blade stop 56. The assembly 14, or material 12, is moved forward by driving the driving gear 42 in a clockwise rotation, which directly rotates the belt 38 of assembly 36 clockwise and directly drives the movable driven gear 44 in a counterclockwise rotation. The counterclockwise rotation of the gear 44 drives the belt 38 of assembly 34 counterclockwise, as well. If desired, the length of weight assembly 14, or weight material 12, can also be moved rearward by driving the gear 42 counterclockwise. The belt pressure cylinder 32 is actuated to apply a normal force between the movable surfaces of the opposing belts 38 that is sufficient to produce the frictional forces required to grip and move the vehicle ballasting weight assembly 14, or weight material 12, forward past the cutting blade 54 a length that is precisely equal to, or is within an acceptable tolerance of (e.g., within 0.1 gram of the exact ballasting weight), the amount of weight material 12 needed to perform the particular ballasting operation or purpose. The severing device 52 is then actuated to force the blade 54 to move through at least the weight material 12 and the adhesive layer 16, leaving the release liner 18 intact. Alternatively, if desired, the blade 54 can be moved completely through the assembly 14 until it contacts the anvil 56 and severs-off the desired incremental piece 10 from the remainder of the assembly 14.

The belts 38 can be actuated for the period of time needed to move the leading end of the assembly 14 enough past the blade 54 to produce the desired incremental length 10 of weight assembly 14, the belts are then stopped and the blade 54 actuated to cut the assembly 14. Alternatively, the movement of the assembly 14 through the gap 46 and the actuation of the cutting blade 54 can be synchronized so that the blade 54 is actuated to cut the assembly 14 while the belts 38 continue to move the assembly 14 forward. It is desirable for the motors (e.g., servo-motors) used to drive the belts 38 to be sensitive enough to precisely cut the assembly 14 within length segments that have corresponding weight increments of at least about 5 grams (1/4 ounce) and preferably within length segments that have corresponding weight increments of less than 5 grams (e.g., 2.5 grams or less). In this way, the assembly 14 can be cut to a desired length that corresponds exactly to the ballasting weight identified, for example, by the applicable wheel balancing equipment, or at least within a tolerance (e.g., within 0.1 gram of the exact ballasting weight) that was otherwise not practical until the present invention.

## Claims

1. A method of dispensing a vehicle ballasting weight having a mass suitable for balancing a portion of a vehicle, said method comprising:
sandwiching a length of a vehicle ballasting weight material, which is longer than it is either wide or thick, between opposing movable surfaces that are movable in the same direction such that each movable surface makes contact with an opposite surface of the weight material;
moving a leading end of the length of vehicle ballasting weight material (12) an incremental distance past a severing position by moving the opposing movable surfaces in a direction toward the severing position while the weight material (12) is sandwiched therebetween; and
severing the vehicle ballasting weight material (12) at the severing position, during or after said moving, to form an incremental length of the weight material (12) that corresponds to an exact mass of the vehicle ballasting weight that is suitable for balancing a portion of a vehicle,
wherein said method is **characterized by** the vehicle ballasting weight material (12) comprises a flexible polymeric matrix material filled with a high density particulate material and the opposing movable surfaces defined by a first belt (38) and a second belt (38) being spaced apart a distance that is automatically adjustable to accommodate the thickness of the vehicle ballasting weight material.

2. The method according to claim 1, wherein the vehicle ballasting weight material (12) is suitable for balancing a wheel of a wheeled vehicle.

3. The method according to claim 1 or 2, wherein the vehicle ballasting weight material (12) is provided in a level wound form.

4. The method according to any one of claims 1 to 3, wherein the vehicle ballasting weight material (12) is backed with an adhesive (16).

5. The method according to any one of claims 1 to 4, wherein during said moving, the opposing movable surfaces are simultaneously movable in the same direction.

6. A method of balancing a wheel of a wheeled vehicle, said method comprising:
dispensing an incremental length of vehicle ballasting weight material (12) according to the method of any one of claims 1 to 5; and
securing the incremental length of vehicle ballasting weight material (12) onto the wheel so as to balance the wheel.

7. The method according to claim 6, further comprising:
using a wheel balancing device to determine the exact mass needed to balance the wheel, and
said severing comprises forming an incremental length of vehicle ballasting weight material (12) that corresponds to within 0.1 grams of the exact mass determined by the wheel balancing device.

8. An apparatus for moving and incrementally severing a length of vehicle ballasting weight material, said apparatus being **characterized by** comprising:
a movable belt mounting element (26) and a stationary belt mounting element (28), said movable element (26) being disposed within an opening (30) in said stationary element (28);
at least two parallel links (24a, 24b), each of said links (24a, 24b) having one end pivotally mounted to said movable belt mounting element (26) and another end pivotally mounted to said stationary belt mounting element, with said opening (30) being dimensioned to allow pivotal movement of said movable element (26) within said opening (30) and about said links (24a, 24b);
a belt pressure actuating assembly (32) having one end mounted to said stationary belt mounting element (28), and another end mounted to said movable belt mounting element (26) and between said links (24a, 24b), such that said belt pressure actuating assembly (32) has a longitudinal axis positioned at an obtuse or acute angle to a longitudinal axis of said movable element (26);
a first drive belt assembly (34) mounted to said stationary belt mounting element (28) and, spaced therefrom, an opposing second drive belt assembly (36) mounted to said movable belt mounting element (26), with said first drive belt assembly (34) comprising a first drive belt (38) defining one opposing movable surface, said second drive belt assembly (36) comprising a second drive belt (38) defining another opposing movable surface, said second drive belt being spaced from said first drive belt so as to form a gap (46) therebetween through which a length of vehicle ballasting weight is moved, each said drive belt being disposed over a plurality of pulleys (40, 41) so as to rotate as said pulleys (40, 41) rotate, said first drive belt assembly (34) further comprising a drive gear, said second drive belt assembly (36) further comprising a driven gear, at least one pulley from the corresponding plurality of pulleys (40, 41) being mounted so as to rotate with said drive gear, at least one pulley from the other plurality of pulleys (40, 41) being mounted so as to rotate with said driven gear, and said drive gear and said driven gear being mounted such that the rotation of said drive gear drives the rotation of said driven gear, said first drive belt and said second drive belt; and
a severing device mounted downstream from said drive belts for severing an incremental length of vehicle ballasting weight material (12) from a length of vehicle ballasting weight material (12) being moved downstream through said gap (46).

9. The apparatus according to claim 8, wherein said parallel links (24a, 24b) enable said drive gear and said driven gear to remain meshed when the vehicle ballasting weight material (12) being dispensed changes thickness.

10. The apparatus according to claim 8 or 9, wherein said gap (46) automatically adjusts to the thickness of the vehicle ballasting weight being dispensed, without having to make adjustments to how said first and second belt assemblies are mounted.

11. The apparatus according to any one of claims 8 to 10, wherein said drive gear drives the rotation of said belts simultaneous.

12. The apparatus according to any one of claims 8 to 11, wherein said gap (46) is open along at least one side of said first and second belt assemblies such that said gap (46) can accommodate vehicle ballasting weight materials having a variety of widths.

13. The apparatus according to any one of claims 8 to 12, in combination with a length of vehicle ballasting weight material (12) in a rolled-up condition.

14. The apparatus according to any one of claims 8 to 12, in combination with a length of vehicle ballasting weight material (12) wound on a level wound spool.

## Patentansprüche

1. Verfahren zur Abgabe eines Fahrzeugballastgewichts, das eine Masse aufweist, die geeignet ist, einen Teil eines Fahrzeugs zu balancieren, wobei das Verfahren Folgendes umfasst:
Einschieben einer Länge eines Fahrzeugballastgewichtmaterials, das länger ist als es entweder breit oder dick ist, zwischen gegenüberliegenden beweglichen Oberflächen, die in derselben Richtung beweglich sind, so dass jede bewegliche Oberfläche Kontakt mit einer gegenüberliegenden Oberfläche des Gewichtmaterials herstellt;
Bewegen eines Vorderendes der Länge des Fahrzeugballastgewichtmaterials (12) um eine zunehmende Strecke an einer Abtrennposition vorbei, indem die gegenüberliegenden beweglichen Oberflächen in eine Richtung zur Abtrennposition hin bewegt werden, während das Gewichtmaterial (12) dazwischen eingeschoben ist; und
Abtrennen des Fahrzeugballastgewichtmaterials (12) an der Abtrennposition während oder nach der Bewegung, um eine zunehmende Länge des Gewichtmaterials (12) zu bilden, die einer genauen Masse des Fahrzeugballastgewichts entspricht, die zum Balancieren eines Teils eines Fahrzeugs geeignet ist,
wobei das Verfahren **dadurch gekennzeichnet ist, dass** das Fahrzeugballastgewichtmaterial (12) ein flexibles Polymermatrixmaterial umfasst, das mit einem partikelförmigen Material hoher Dichte gefüllt ist und die gegenüberliegenden beweglichen Oberflächen durch einen ersten Riemen (38) und einen zweiten Riemen (38) definiert sind, die durch einen Abstand voneinander getrennt sind, der automatisch anpassbar ist, um die Dicke des Fahrzeugballastgewichtmaterials aufzunehmen.

2. Verfahren nach Anspruch 1, wobei das Fahrzeugballastgewichtmaterial (12) zum Balancieren eines Rads eines mit Rädern versehenen Fahrzeugs geeignet ist.

3. Verfahren nach Anspruch 1 oder 2, wobei das Fahrzeugballastgewichtmaterial (12) in einer in Lagen aufgewickelten Form bereitgestellt wird.

4. Verfahren nach einem der Ansprüche 1 bis 3, wobei das Fahrzeugballastgewichtmaterial (12) mit einer klebenden Rückseite (16) versehen ist.

5. Verfahren nach einem der Ansprüche 1 bis 4, wobei während der Bewegung die gegenüberliegenden beweglichen Oberflächen gleichzeitig in derselben Richtung beweglich sind.

6. Verfahren zum Balancieren eines Rads eines mit Rädern versehenen Fahrzeugs, wobei das Verfahren Folgendes umfasst:
Abgeben einer zunehmenden Länge von Fahrzeugballastgewichtmaterial (12) gemäß dem Verfahren nach einem der Ansprüche 1 bis 5; und
Befestigen der zunehmenden Länge von Fahrzeugballastgewichtmaterial (12) auf dem Rad, um das Rad zu balancieren.

7. Verfahren nach Anspruch 6, ferner umfassend:
Verwenden einer Radbalanciervorrichtung zur Ermittlung der genauen Masse, die zum Balancieren des Rads erforderlich ist, und
Wobei das Abtrennen das Bilden einer zunehmenden Länge von Fahrzeugballastgewichtmaterial (12) umfasst, die innerhalb von 0,1 Gramm der genauen, durch die Radbalanciervorrichtung ermittelten Masse entspricht.

8. Vorrichtung zum Bewegen und zunehmenden Abtrennen einer Länge von Fahrzeugballastgewichtmaterial, wobei die Vorrichtung **dadurch gekennzeichnet ist, dass** sie Folgendes umfasst:
ein bewegliches Riemenbefestigungselement (26) und ein feststehendes Riemenbefestigungselement (28), wobei das bewegliche Element (26) innerhalb einer Öffnung (30) in dem feststehenden Element (28) angeordnet ist;
mindestens zwei parallele Verbindungen (24a, 24b), wobei jede der Verbindungen (24a, 24b) ein Ende aufweist, das drehbar an dem beweglichen Riemenbefestigungselement (26) befestigt ist, und ein weiteres Ende, das drehbar an dem feststehenden Riemenbefestigungselement befestigt ist, wobei die Öffnung (30) so bemessen ist, dass sie eine Drehbewegung des beweglichen Elements (26) innerhalb der Öffnung (30) und um die Verbindungen (24a, 24b) herum ermöglicht;
eine Riemendruckbetätigungsanordnung (32), aufweisend ein Ende, das an dem feststehenden Riemenbefestigungselement (28) befestigt ist, und ein weiteres Ende, das an dem beweglichen Riemenbefestigungselement (26) und zwischen den Verbindungen (24a, 24b) befestigt ist, so dass die Riemendruckbetätigungsanordnung (32) eine Längsachse aufweist, die in einem stumpfen oder spitzen Winkel zu einer Längsachse des beweglichen Elements (26) angeordnet ist;
eine erste Antriebsriemenanordnung (34), die an dem feststehenden Riemenbefestigungselement (28) befestigt und in einem Abstand zu diesem angeordnet ist, eine gegenüberliegende zweite Antriebsriemenanordnung (36), die an dem beweglichen Riemenbefestigungselement (26) befestigt ist, wobei die erste Antriebsriemenanordnung (34) einen ersten Antriebsriemen (38) umfasst, der eine gegenüberliegende bewegliche Oberfläche definiert, wobei die zweite Antriebsriemenanordnung (36) einen zweiten Antriebsriemen (38) umfasst, der eine weitere gegenüberliegende bewegliche Oberfläche definiert, wobei der zweite Antriebsriemen in einem Abstand zum ersten Antriebsriemen angeordnet ist, um einen Spalt (46) dazwischen zu bilden, durch den eine Länge von Fahrzeugballastgewicht bewegt wird, wobei jeder Antriebsriemen über einer Vielzahl von Riemenscheiben (40, 41) angeordnet ist, um sich zu drehen, wenn sich die Riemenscheiben (40, 41) drehen, wobei die erste Antriebsriemenanordnung (34) ferner ein Antriebszahnrad umfasst, wobei die zweite Antriebsriemenanordnung (36) ferner ein angetriebenes Zahnrad umfasst, wobei mindestens eine Riemenscheibe aus der entsprechenden Vielzahl von Riemenscheiben (40, 41) so befestigt ist, dass sie sich mit dem Antriebszahnrad dreht, wobei mindestens eine Riemenscheibe aus der anderen Vielzahl von Riemenscheiben (40, 41) so befestigt ist, dass sie sich mit dem angetriebenen Zahnrad dreht, und wobei das Antriebszahnrad und das angetriebene Zahnrad so befestigt sind, dass die Drehung des Antriebszahnrads die Drehung des angetriebenen Zahnrads, des ersten Antriebsriemens und des zweiten Antriebsriemens antreibt; und
eine Abtrennvorrichtung, die nach den Antriebsriemen befestigt ist, um eine zunehmende Länge von Fahrzeugballastgewichtmaterial (12) von einer Länge von Fahrzeugballastgewichtmaterial (12) abzutrennen, die in Bewegungsrichtung durch den Spalt (46) bewegt wird.

9. Vorrichtung nach Anspruch 8, wobei die parallelen Verbindungen (24a, 24b) ermöglichen, dass das Antriebszahnrad und das angetriebene Zahnrad in Eingriff bleiben, wenn sich die Dicke des abgegebenen Fahrzeugballastgewichtmaterials (12) ändert.

10. Vorrichtung nach Anspruch 8 oder 9, wobei sich der Spalt (46) automatisch an die Dicke des abgegebenen Fahrzeugballastgewichts anpasst, ohne dass Anpassungen daran vorzunehmen sind, wie die erste und die zweite Riemenanordnung befestigt sind.

11. Vorrichtung nach einem der Ansprüche 8 bis 10, wobei das Antriebszahnrad die Drehung der Riemen gleichzeitig antreibt.

12. Vorrichtung nach einem der Ansprüche 8 bis 11, wobei der Spalt (46) entlang mindestens einer Seite der ersten und der zweiten Riemenanordnung offen ist, so dass der Spalt (46) Fahrzeugballastgewichtmaterialien mit einer Vielfalt von Breiten aufnehmen kann.

13. Vorrichtung nach einem der Ansprüche 8 bis 12 in Kombination mit einer Länge von Fahrzeugballastgewichtmaterial (12) in aufgerolltem Zustand.

14. Vorrichtung nach einem der Ansprüche 8 bis 12 in Kombination mit einer Länge von Fahrzeugballastgewichtmaterial (12), das auf einer in Lagen aufgewickelten Spule aufgewickelt ist.

## Revendications

1. Procédé de distribution d'un poids de lestage de véhicule ayant une masse appropriée pour équilibrer une partie d'un véhicule, ledit procédé comprenant les étapes suivantes :
prendre en sandwich une longueur d'un matériau de poids de lestage de véhicule, qui est plus longue que large ou épaisse, entre des surfaces opposées mobiles dans le même sens de sorte que chaque surface mobile soit en contact avec une surface opposée du matériau du poids ;
déplacer une extrémité avant de la longueur de matériau de poids de lestage de véhicule (12) d'une distance incrémentielle au-delà d'une position de coupe en déplaçant les surfaces mobiles opposées dans un sens vers la position de coupe pendant que le matériau de poids (12) est pris en sandwich entre celles-ci ; et
couper le matériau de poids de lestage de véhicule (12) dans la position de coupe, pendant ou après ledit mouvement, pour former une longueur incrémentielle du matériau de poids (12) qui correspond à une masse exacte du poids de lestage de véhicule adaptée à l'équilibrage d'une partie d'un véhicule,
dans lequel ledit procédé est **caractérisé en ce que** le matériau de poids de lestage de véhicule (12) comprend un matériau de matrice polymère flexible chargé d'un matériau particulaire à haute densité, les surfaces mobiles opposées définies par une première courroie (38) et une deuxième courroie (38) étant espacées d'une distance qui est réglable automatiquement pour tenir compte de l'épaisseur du matériau de poids de lestage de véhicule.

2. Procédé selon la revendication 1 dans lequel le matériau de poids de lestage de véhicule (12) est adapté pour équilibrer une roue d'un véhicule à roues.

3. Procédé selon la revendication 1 ou 2 dans lequel le matériau de poids de lestage de véhicule (12) est fourni sous une forme bobinée à spires jointives.

4. Procédé selon l'une quelconque des revendications 1 à 3 dans lequel le matériau de poids de lestage de véhicule (12) est recouvert au dos d'un adhésif (16).

5. Procédé selon l'une quelconque des revendications 1 à 4 dans lequel, pendant ledit mouvement, les surfaces mobiles opposées sont simultanément mobiles dans le même sens.

6. Procédé d'équilibrage d'une roue d'un véhicule à roues, ledit procédé comprenant les étapes suivantes :
distribuer une longueur incrémentielle de matériau de poids de lestage de véhicule (12) selon le procédé de l'une quelconque des revendications 1 à 5 ; et
fixer la longueur incrémentielle de matériau de poids de lestage de véhicule (12) sur la roue afin d'équilibrer la roue.

7. Procédé selon la revendication 6 comprenant en outre l'étape suivante :
utiliser un appareil d'équilibrage de roue pour déterminer la masse exacte nécessaire pour équilibrer la roue, et
ladite coupe consiste à former une longueur incrémentielle de matériau de poids de lestage de véhicule (12) qui correspond, à 0,1 gramme près, à la masse exacte déterminée par l'appareil d'équilibrage de roue.

8. Appareil pour déplacer et couper de manière incrémentielle une longueur de matériau de poids de lestage de véhicule, ledit appareil étant **caractérisé en ce qu'**il comprend :
un élément de montage de courroie mobile (26) et un élément de montage de courroie fixe (28), ledit élément mobile (26) étant disposé dans une ouverture (30) dudit élément fixe (28) ;
au moins deux biellettes parallèles (24a, 24b), chacune desdites biellettes (24a, 24b) ayant une extrémité montée de façon à pouvoir pivoter sur ledit élément de montage de courroie mobile (26) et une autre extrémité montée de façon à pouvoir pivoter sur ledit élément de montage de courroie fixe, ladite ouverture (30) étant dimensionnée de façon à permettre un mouvement de pivotement dudit élément mobile (26) dans ladite ouverture (30) et autour desdites biellettes (24a, 24b) ;
un ensemble d'actionnement de pression de courroie (32) ayant une extrémité montée sur ledit élément de montage de courroie fixe (28) et une autre extrémité montée sur ledit élément de montage de courroie mobile (26) et entre lesdites biellettes (24a, 24b), de telle sorte que ledit ensemble d'actionnement de pression de courroie (32) a un axe longitudinal positionné selon un angle obtus ou aigu par rapport à un axe longitudinal dudit élément mobile (26) ;
un premier ensemble de courroie d'entraînement (34) monté sur ledit élément de montage de courroie fixe (28) et, espacé de celui-ci, un deuxième ensemble de courroie d'entraînement opposé (36) monté sur ledit élément de montage de courroie mobile (26), ledit premier ensemble de courroie d'entraînement (34) comprenant une première courroie d'entraînement (38) définissant une surface mobile opposée, ledit deuxième ensemble de courroie d'entraînement (36) comprenant une deuxième courroie d'entraînement (38) définissant une autre surface mobile opposée, ladite deuxième courroie d'entraînement étant espacée de ladite première courroie d'entraînement de manière à former un espace (46) entre elles à travers lequel une longueur de poids de lestage de véhicule est déplacée, chacune desdites courroies d'entraînement étant disposée sur une pluralité de poulies (40, 41) de manière à tourner en même temps que lesdites poulies (40, 41), ledit premier ensemble de courroie d'entraînement (34) comprenant en outre un pignon d'entraînement, ledit deuxième ensemble de courroie d'entraînement (36) comprenant en outre un pignon mené, au moins une poulie de la pluralité correspondante de poulies (40, 41) étant montée de manière à tourner avec ledit pignon d'entraînement, au moins une poulie de l'autre pluralité de poulies (40, 41) étant montée de manière à tourner avec ledit pignon mené, et ledit pignon d'entraînement et ledit pignon mené étant montés de telle sorte que la rotation dudit pignon d'entraînement entraîne la rotation dudit pignon mené, de ladite première courroie d'entraînement et de ladite deuxième courroie d'entraînement ; et
un dispositif de coupe monté en aval desdites courroies d'entraînement destiné à couper une longueur incrémentielle de matériau de poids de lestage de véhicule (12) à partir d'une longueur de matériau de poids de lestage de véhicule (12) déplacée vers l'aval à travers ledit espace (46).

9. Appareil selon la revendication 8, dans lequel lesdites biellettes parallèles (24a, 24b) permettent audit pignon d'entraînement et audit pignon mené de rester en prise lorsque le matériau de poids de lestage de véhicule (12) en cours de distribution change d'épaisseur.

10. Appareil selon la revendication 8 ou 9, dans lequel ledit espace (46) s'ajuste automatiquement à l'épaisseur du poids de lestage de véhicule en cours de distribution sans qu'il soit nécessaire de procéder à des ajustements sur la façon dont lesdits premier et deuxième ensembles de courroie sont montés.

11. Appareil selon l'une quelconque des revendications 8 à 10 dans lequel ledit pignon d'entraînement entraîne la rotation simultanée des deux courroies.

12. Appareil selon l'une quelconque des revendications 8 à 11 dans lequel ledit espace (46) est ouvert le long d'au moins un côté desdits premier et deuxième ensembles de courroies de telle sorte que ledit espace (46) peut accepter des matériaux de poids de lestage de véhicule de différentes largeurs.

13. Appareil selon l'une quelconque des revendications 8 à 12 en combinaison avec une longueur de matériau de poids de lestage de véhicule (12) dans un état enroulé.

14. Appareil selon l'une quelconque des revendications 8 à 12 en combinaison avec une longueur de matériau de poids de lestage de véhicule (12) dans un état bobiné à spires jointives.
